# EUROPEAN PATENT SPECIFICATION

(11) **EP 0 439 868 B1**
(45) Date of publication and mention of the grant of the patent: **23.11.1994**
(21) Application number: 90203495.8
(22) Date of filing: 24.12.1990
(51) Int. Cl.: B29C 65/00

(54) **Composite elements of plastic-covered plate for composable structures, especially shelving**
Verbundelemente aus kunststoffüberzogenen Platten für zusammensetzbare Strukturen, insbesondere Regale
Eléments composites de panneaux recouverts de matière plastique pour structures à assembler, notamment étagères

(30) Priority: 02.02.1990 IT 1925390
(43) Date of publication of application: 07.08.1991
(73) Proprietor: ARNEG S.P.A., I-35010 Marsango di Campo S. Martino, Padua (IT)
(72) Inventor: Marzaro, Roberto, I-35010 Campo San Martino, Padua (IT)
(74) Representative: Fusina, Gerolamo

(56) References cited:
- DE-A- 2 925 159
- DE-A- 2 946 052
- US-A- 2 976 201

## Description

This invention relates to composite elements of plastic-covered plate for composable structures, especially shelving.

Composite structures composed of twin elements or elements which can be linked together, e.g. shelving, shelves, panels, structures for electro-domestic appliances, window and door frames, etc., are at present produced using unit plate elements plastic-covered on one single surface, which may be the exterior surface of the finished product, the other surface being non plastic-covered and capable of being connected by means of welding to identical and complementary surfaces of other elements or reinforcing elements.

Once finished, a product of this kind has a non plastic-covered surface which may be of limited or limitative use for particular applications.

On the other hand, unit elements of bi-plastic-covered plate, or plate plastic-covered on both of its surfaces directed towards the exterior, are also known. Once unit elements of this kind are assembled together in the required manner, they are able to satisfy the particular market requirements with respect to specialized applications and, at the same time, can result in the production of a more useful product with an improved finish.

The object of this invention is to provide a product formed of mono-plastic-covered and/or bi-plastic-covered plate elements which can be used in the production of composable structures without necessarily involving extremely costly production, and able to use welding machines and completely automatic assembly.

This problem is solved according to this invention by the production of composite elements of plastic-covered plate for composable structures, especially shelving, formed by the connection of at least one flat plate element and at least one box-type plate elements, wherein one element acts as a supporting shelf or as an exterior surface of said composable structures and the other element acts as a reinforcing element, characterized in that said at least one flat plate element is plastic-covered on both of its surfaces and said at least one box-type plate element is plastic-covered at least on its exterior surface, said at least one flat plate element being provided with a plurality of non plastic-covered zones, which are opposite and connected to a plurality of non plastic-covered and drawn zones provided on the plastic-covered exterior surface of said at least one box-type plate element.

Said at least one box-type plate element is preferably plastic-covered on both of its surfaces and has openings aligned with said non plastic-covered zones provided on one surface for the introduction of a spot-welding electrode in correspondence with the interior surface of said at least one box-type plate element, wherein the latter has said drawn zones.

The composite elements according to this invention are advantageously produced by a method consisting of a phase for preparing at least one flat plate element plastic-covered on both of its surfaces and at least one box-type plate element plastic-covered at least on its exterior surface, a phase for producing a plurality of non plastic-covered zones on said at least one flat plate element, a phase for producing non plastic-covered zones on the exterior surface of said at least one box-type plate element and for producing drawing work in correspondence with these last-mentioned zones, and a phase for disposing the two abovementioned elements opposite said non plastic-covered zones and connecting one to the other by means of electric welding so as to join together said at least two elements.

The method preferably also provides for a phase for producing in said at least one box-type plate element plastic-covered on both of its surfaces openings aligned with said non plastic-covered zones provided on one surface for the introduction of a spot-welding electrode in correspondence with the interior surface of said at least one box-type plate element, where the latter has said drawn zones.

The structural and functional features and advantages of the composite elements according to this invention will be more readily understood from the following description given by way of a non-limiting example with reference to the accompanying schematic drawings, in which:

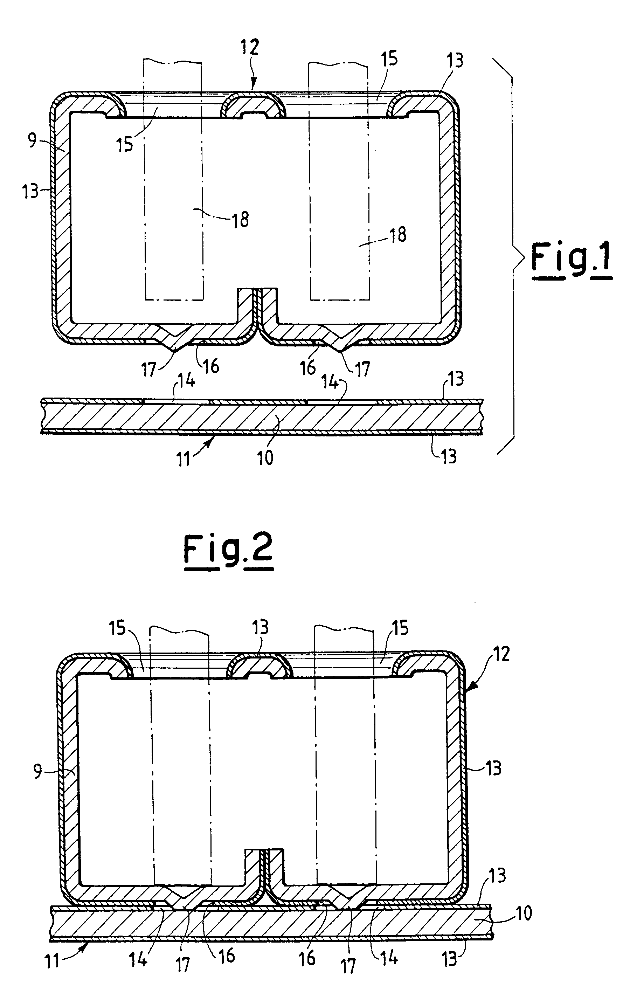

- Fig. 1: shows an exploded section of an example of a composite element according to this invention;
- Fig. 2: shows a section identical to that of Fig. 1, with the composite element in its final arrangement;
- Fig. 3: shows an exploded section of a second embodiment of the composite element according to this invention, and
- Fig. 4: shows a section identical to that of Fig. 3, with the composite element in its final arrangement.

With reference to the drawings, a composite element of plate for composable structures, especially for shelving, but equally suitable for the production of shelves, panels, structures for electro-domestic appliances, window and door frames, furniture in general and coverings, comprises, in diagrammatic form, at least one substantially flat plate element, designated in general by the reference numeral 11, and at least one box-type plate element, designated in general by the reference numeral 12.

In the example illustrated, a supporting or shelf element formed essentially of a flat supporting surface and a series of reinforcing cross members is to be produced. These supporting elements are not shown in their totality but merely and essentially in correspondence with a smaller portion of the flat surface and of a reinforcing beam.

The flat plate element 11 is formed of a plate 10 plastic-covered by means of a film 13, e.g. of PVC, held in place by the interposition of an adhesive agent, on both of its surfaces and on which are provided non plastic-covered zones 14, e.g. by removing the film 13 of PVC and the associated interposed adhesive by means of appropriate removing tools.

The box-type plate element 12, formed of a plate 9 plastic-covered by means of the film 13 on at least one surface, in the example, the surface exterior, is obtained by means of appropriate blanking so as to form a series of openings 15 and, after portions of film in localized zones 16 have been removed by means of appropriate removing tools, is provided with drawing work 17 directed towards the exterior of the appropriate element in correspondence with said zones without the film 16. Alternatively, the box-type plate element can be plastic-covered on both its interior and exterior surfaces.

These elements 12 are successively folded over to produce a box shape so as to define a corresponding position between the openings 15 and the associated drawing work 17. In the case of the example illustrated in the drawings, in view of the fact that the box-type plate element 12 has two mirror-like portions alongside one another defined by its folds and provided with two parallel rows of both openings 15 and drawing work 17, the distance between the two rows of openings 15 and drawing work 17 should be equal to the distance of the two corresponding rows of non plastic-covered zones 14 of the flat plate element 11. The composite element of plate in its final form will be produced by assembly and by being locked in its final position by means of spot-welding effected by the introduction of two rows of electrodes, indicated by the broken lines at 18, which define the passage of the current with fusion of the drawing work 17 directed towards the exterior and in contact with the non plastic-covered zones 14 and with the production of joining points. This results in a composite element of plate having both its surfaces directed towards the exterior completely plastic-covered, and it is possibile to obtain elements of this kind in spite of at least one element of plate having both of its exterior surfaces plastic-covered.

As mentioned briefly hereinabove, an element composed in this manner is produced by a method consisting essentially of a phase for preparing at least one substantially flat plate element plastic-covered on both of its surfaces and at least one box-type plate element essentially plastic-covered on its exterior surface by means of a covering of film held firmly in position by means of an adhesive agent. The at least two elements of plate are subjected successively to the action of appropriate tools for removing the film from localized zones, so as to produce a plurality of non plastic-covered zones on said at least one substantially flat plate element and to produce non plastic-covered zones on the exterior surface of said at least one box-type plate element.

Following the non plastic-covered zones of the box-type element, said element is also provided with drawing work directed towards the exterior.

Before these operations are effected, said at least one box-type plate element is preferably provided with openings aligned with said non plastic-covered zones provided on one surface opposite to the surface without the film. The openings are such that they permit the introduction of spot-welding electrodes so as to bring them into correspondence with the interior surface of said at least one box-type plate element, where the latter has said drawn zones.

The spot-welding in correspondence with these last-mentioned zones is effected once the two above mentioned elements have been disposed opposite said non plastic-covered zones in such a way that they are joined together by means of electric welding.

As indicated hereinabove, the method allows for the production of a composite element whose surfaces directed towards the exterior are plastic-covered, and the junction of the component parts is obtained in spite of the fact that at least one of these components has its exterior surfaces completely plastic-covered.

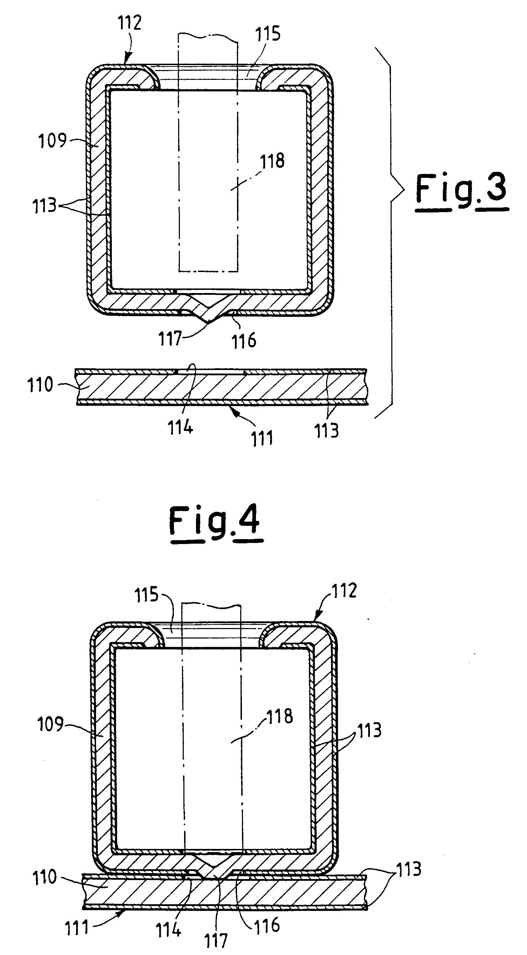

The second embodiment shown in Figures 3 and 4 illustrates a composite element of plate for composable structures essentially having the same form as the composite element described and illustrated hereinbefore, but differing therefrom essentially in that a plastic-covered film 113 is also disposed on the interior surface of the box-type plate element which is designated in general by the reference numeral 112 and has a simpler single-box structure. It should be noted that the reference numerals relating to similar elements have been varied in that they are increased by 100.

## Claims

1. Composite elements of plastic-covered plate for composable structures, especially shelving, formed by the connection of at least one flat plate element (11,111) and at least one box-type plate element (12,112), wherein one element acts as a supporting shelf or as an exterior surface of said composable structures and the other element acts as a reinforcing element, characterized in that said at least one flat plate element (11,111) is plastic-covered (13,113) on both of its surfaces and said at least one box-type plate element (12,112) is plastic-covered (13,113) at least on its exterior surface, said at least one flat plate element (11,111) being provided with a plurality of non plastic-covered zones (14,114), which are opposite and connected to a plurality of non plastic-covered (16,116) and drawn (17,117) zones provided on the plastic-covered exterior surface of said at least one box-type plate element (12,112).

2. Composite elements according to claim 1, characterized in that said at least one box-type plate element (112) is plastic-covered (113) on both of its surfaces.

3. Composite elements according to claim 1, characterized in that said at least one box-type plate element (12,112) has openings (15,115) aligned with said non plastic-covered zones (16,116) provided on one surface for the introduction of a spot-welding electrode (18,118) in correspondence with the interior surface of said at least one box-type plate element (12,112), wherein the latter has said drawn zones (17,117).

4. Composite elements according to claim 1, characterized in that said drawn zones (17,117) are directed towards the exterior of said element (12,112).

5. Composite elements according to claim 1, characterized in that said at least one flat plate element (11) is provided with two parallel rows of non plastic-covered zones (14) and in that said at least one box-type plate element (12) is provided with two rows of openings (15) and drawing work (17) in correspondence with said non plastic-covered zones (16), wherein the distance between the two rows of openings (15) and drawing work (17) is equal to the distance of the two corresponding rows of non plastic-covered zones (16) of the flat plate element (11).

6. Method for the production of composite elements according to any one of the preceding claims, characterized in that it comprises a phase for preparing at least one flat plate element (11,111) plastic-covered (13,113) on both of its surfaces and at least one box-type plate element (12,112) plastic-covered (13,113) at least on its exterior surface, a phase for producing a plurality of non plastic-covered zones (14,114) on said at least one flat plate element (11,111), a phase for producing non plastic-covered zones (16,116) on the exterior surface of said at least one box-type plate element (12,112) and for producing drawing work (17,117) in correspondence with these last-mentioned zones (16,116), and a phase for disposing the two abovementioned elements opposite said non plastic-covered zones and connecting one to the other by means of electric welding so as to join together said at least two elements (11,111;12,112).

7. Method according to claim 6, characterized moreover by preparing said at least one box-type plate element (112) plastic-covered (113) on both of its surfaces.

8. Method according to claim 6, characterized in that it comprises moreover a phase for producing in said at least one box-type plate element (12,112) openings (15,115) aligned with said non plastic-covered zones (16,116) provided on one surface for the introduction of a spot-welding electrode (18,118) in correspondence with the interior surface of said at least one box-type plate element (12,112), where the latter has said drawn zones (17,117).

## Patentansprüche

1. Verbundelemente aus kunststoffüberzogenen Platten für zusammensetzbare Strukturen, insbesondere Regale, welche durch die Verbindung von mindestens einem flachen Plattenelement (11, 111) und mindestens einem Box-artigen Plattenelement (12, 112) gebildet werden, wobei ein Element als Trägerrahmen oder als Außenfläche der zusammensetzbaren Strukturen und das andere Element als Verstärkungselement wirkt, dadurch gekennzeichnet, daß das zumindest eine flache Plattenelement (11, 111) an seinen beiden Oberflächen kunststoffüberzogen (13, 113) ist und daß das zumindest eine Box-artige Plattenelement (12, 112) zumindest an dessen Außenfläche mit Kunststoff überzogen (13, 113) ist, daß zumindest ein flaches Plattenelement (11, 111) mit mehreren nicht kunststoffüberzogenen Bereichen (14, 114) ausgestaltet ist, die mehreren nicht kunststoffüberzogenen (16, 116) und gezogenen (17, 117) Bereichen gegenüberliegen und mit diesen verbunden sind, welche auf dar kunststoffüberzogenen Außenfläche des zumindest einen Box-artigen Plattenelementes (12, 112) vorgesehen sind.

2. Verbundelemente nach Anspruch 1, dadurch gekennzeichnet, daß das zumindest eine Box-artige Plattenelement (112) an dessen beiden Oberflächen kunststoffüberzogen (113) ist.

3. Verbundelemente nach Anspruch 1, dadurch gekennzeichnet, daß das zumindest eine Box-artige Plattenelement (12, 112) Öffnungen (15, 115) aufweist, welche zu den nicht kunststoffüberzogenen Bereichen (16, 116) ausgerichtet sind, welche auf einer Oberfläche zum Einführen einer Punkt-Schweißelektrode (18, 118) in Übereinstimmung mit der Innenoberfläche des mindestens einen Box-artigen Plattenelementes (12, 112) vorgesehen sind, wobei das Plattenelement (12, 112) die gezogenen Bereiche (17, 117) aufweist.

4. Verbundelemente nach Anspruch 1, dadurch gekennzeichnet, daß die gezogenen Bereiche (17, 117) zur Außenseite des Elements (12, 112) gerichtet sind.

5. Verbundelemente nach Anspruch 1, dadurch gekennzeichnet, daß das zumindest eine flache Plattenelement (11) mit zwei parallelen Reihen nicht kunststoffüberzogener Bereiche (14) ausgestaltet ist, und daß das zumindest eine Box-artige Plattenelement (12) mit zwei Reihen Öffnungen (15) und Ziehresultat (17) in Übereinstimmung mit den nicht kunststoffüberzogenen Bereichen (16) ausgestaltet ist, wobei der Abstand zwischen den beiden Öffnungs (15) - und Ziehresultat (17) - Reihen dem Abstand zwischen den beiden entsprechenden Reihen nicht kunststoffüberzogener Bereiche (16) des flachen Plattenelements (11) entspricht.

6. Verfahren zum Herstellen von Verbundelementen gemäß einem der vorstehenden Ansprüche, dadurch gekennzeichnet, daß das Verfahren einen Arbeitsschritt zum Vorbereiten mindestens eines an dessen beiden Oberflächen mit Kunststoff überzogen (13, 113) Plattenelementes (11, 111) und mindestens eines Box-artigen Plattenelementes (12, 112), welches mindestens an dessen Außenfläche kunststoffüberzogen (13, 113) ist, umfaßt, sowie einen Arbeitsschritt zum Herstellen mehrerer nicht kunststoffüberzogener Bereiche (14, 114) auf mindestens dem einen flachen Plattenelement (11, 111), einen Arbeitsschritt zum Herstellen nicht kunststoffüberzogener Bereiche (16, 116) auf der Außenoberfläche des mindestens einen Box-artigen Plattenelementes (12, 112) und zum Herstellen von Ziehresultant (17, 117) in Übereinstimmung mit den letztgenannten Bereichen (16, 116) und einen Arbeitsschritt zum Anordnen beider oben genannter Elemente gegenüberliegend den nicht kunststoffüberzogenen Bereichen und zum miteinander Verbinden mittels Elektroschweißen, so daß zumindest die beiden Elemente (11, 111; 12, 112) miteinander verbunden werden.

7. Verfahren nach Anspruch 6, ferner gekennzeichnet durch das Vorbereiten des mindestens einen Box-artigen Plattenelementes (112), welches an dessen beiden Oberflächen kunststoffüberzogen (113) ist.

8. Verfahren nach Anspruch 6, dadurch gekennzeichnet, daß es ferner einen Arbeitsschritt zum Herstellen von Öffnungen (15, 115) in dem zumindest einen Box-artigen Plattenelement (12, 112) umfaßt, welche zu den nichtkunststoffüberzogenen Bereichen (16, 116) ausgerichtet sind, die auf einer Oberfläche zum Einführen der Punkt-Schweiß-Elektrode (18, 118) in Übereinstimmung mit der Innenfläche des mindestens einen Box-artigen Plattenelementes (12, 112) an einem Ort vorgesehen sind, an dem das Plattenelement (12, 112) die gezogenen Bereiche (17, 117) aufweist.

## Revendications

1. Eléments composites de panneaux recouverts de matière plastique pour structure à assembler, notamment étagères, formés par l'assemblage d'au moins un élément de panneau plat (11,111) et d'au moins un élément de panneau du type boîte (12,112) dans lequel un élément représente une étagère de support ou une surface extérieure desdites structures assemblées, et les autres éléments représentent des éléments de renfort caractérisés en ce qu' au moins un élément de panneau plat (11,111) est recouvert sur chacune de ses faces (13,113) de matière plastique et au moins un élément de panneau du type boîte (12,112) est recouvert sur ses surfaces extérieures (13,113) de matière plastique, au moins un élément de panneau plat (11,111) étant pourvu d' une pluralité de zones (14,114) non revêtues de plastique, qui sont en vis-à-vis et connectées à une pluralité de zones non recouvertes de matière plastique (16,116) et des zones (17,117) étirées, recouvertes sur leur surface extérieure de matière plastique d'au moins un élément de panneau du type boîte (12, 112).

2. Eléments composites selon la revendication 1 caractérisée en ce qu'au moins un élément de panneau du type boîte (112), est recouvert sur chacune de ses surfaces de matière plastique (113).

3. Eléments composites selon la revendication 1 caractérisée en ce qu'au moins un élément de panneau du type boîte (12,112), possède des ouvertures (15,115) alignées avec lesdites zones non recouvertes de matières plastiques (16,116) disposées sur une surface pour l'introduction d'une électrode à soudure parpoint (18,118) en relation avec la surface intérieure d'au moins un élément de panneau du type boîte (12,112) dans lequel ce dernier comporte des zones étirées (17,117).

4. Eléments composites selon la revendication 1 caractérisée en ce que les zones étirées (17, 117) sont dirigés vers l'extérieur dudit élément (12, 112).

5. Eléments composites selon la revendication 1 caractérisée en ce que au moins un élément de panneau plat (11) est pourvu de deux lignes parallèles non recouvertes de matière plastique (14) et en ce que au moins un élément de panneau du type boîte (12) est pourvu de deux lignes d'ouvertures (15) et d'une zone de travail étirée (17) en correspondance avec lesdites zones (16) non revêtues de matière plastique, dans lesquelles la distance entre les deux lignes d'ouverture (15) et la zone de travail étirée (17) est égale à la distance de deux lignes correspondantes aux zones (16) non revêtues de matière plastique d'un élément de panneau (11).

6. Procédé pour la production d'éléments composites selon l'une quelconque des revendications précédentes caractérisé en ce que il comprend une étape pour la préparation d'au moins un élément plat de panneau (11, 111) recouvert sur chacune de ses faces (13, 113) de matière plastique et d'au moins un élément de panneau (12, 112) recouvert de matière plastique (13,113) sur sa surface extérieure, une étape pour l'élaboration d'une pluralité de zones (14,114) non recouvertes de matière plastique sur au moins un élément plat de panneau (11, 111), une étape pour l'élaboration de zones (16, 116) non recouvertes de matière plastique sur la surface extérieure d'au moins un élément de panneau (12, 112) de type boîte et pour l'élaboration d'une zone de travail étirée (17,117) en relation avec les dernières zones mentionnées (16,116) et une étape pour disposer les deux éléments mentionnés ci-dessus en vis-à-vis des zones non recouvertes de matière plastique et connectées entre elles par des moyens de soudage électrique de manière à joindre entre eux au moins deux éléments (11, 111 ; 12, 112).

7. Procédé selon la revendication 6 caractérisé en ce qu'on prépare, en outre, au moins un élément de panneau (112) de type boîte recouvert de matière plastique (113) sur chacune de ses surfaces.

8. Procédé selon la revendication 6 caractérisé en ce qu'il comprend en outre une étape pour l'élaboration d'au moins d'un élément de panneau (12, 112), comportant des ouvertures (15,115) alignées avec lesdites zones (16,116) non recouvertes de matière plastique disposées sur une surface pour l'introduction d'une électrode (18, 118) de soudure par point en correspondance avec la surface intérieure d'un élément de panneau de type boîte (12, 112) dans lequel ce dernier comporte des zones étirées (17, 117).
